Europäisches Patentamt

European Patent Office

Office européen des brevets

(19)

(11) Veröffentlichungsnummer: **0 298 212 B1**

## (12) EUROPÄISCHE PATENTSCHRIFT

(45) Veröffentlichungstag der Patentschrift: 30.10.91

(51) Int. Cl.⁵: **B01D 53/14**, B01D 53/34

(21) Anmeldenummer: **88107055.1**

(22) Anmeldetag: **03.05.88**

---

(54) **Verfahren zur Reinigung von Gasen, die neben Schwefelwasserstoff und anderen Schwefelverbindungen Blausäure als Verunreinigung enthalten.**

---

(30) Priorität: **10.07.87 DE 3722836**

(43) Veröffentlichungstag der Anmeldung:
**11.01.89 Patentblatt 89/02**

(45) Bekanntmachung des Hinweises auf die
Patenterteilung:
**30.10.91 Patentblatt 91/44**

(84) Benannte Vertragsstaaten:
**BE DE FR NL**

(56) Entgegenhaltungen:
**EP-A- 0 229 407**
**DE-B- 2 604 683**

(73) Patentinhaber: **Krupp Koppers GmbH**
**Altendorfer Strasse 120**
**W-4300 Essen 1(DE)**

(72) Erfinder: **Wohner, Hans Jürgen**
**Gladebecker Strasse 368**
**W-4300 Essen 12(DE)**
Erfinder: **Diemer, Peter, Dr.**
**Schliepersberg 2**
**W-4300 Essen 1(DE)**
Erfinder: **Menzel, Johannes**
**Siedlerstrasse 47**
**W-4100 Duisburg 25(DE)**

**Beschreibung**

Die Erfindung betrifft ein Verfahren zur Reinigung von Gasen, die neben Schwefelwasserstoff und anderen Schwefelverbindungen Blausäure als Verunreinigung enthalten, wobei die Entschwefelung der Gase in an sich bekannter Weise erfolgt.

Technische Gase, wie Koksofengas, Synthesegas, Partialoxidationsgas, Prozeßabgase und ähnliche Gase, aber auch natürlich Gase, wie z.B. Erdgas, enthalten in vielen Fällen sogenannte saure Gasebestandteile, wie Schwefelwasserstoff und andere Schwefelverbindungen, wie z.B. $CS_2$ und COS, sowie Blausäure als Verunreinigungen, die aus den Gasen vor deren Weiterverarbeitung entfernt werden müssen.

Hierfür kommen vor allem nasse Absorptionsverfahren zur Anwendung, bei denen die sauren Gasebestandteile durch physikalisch oder chemisch wirkende Lösungsmittel aus dem Gas entfernt werden. Die heute üblichen nassen Absorptionsverfahren lassen sich dabei in zwei Kategorien einteilen. In der einen Kategorie wird bei der Regeneration des verwendeten Lösungsmittels ein Sauergas gewonnen, das anschließend zur Erzeugung von Schwefelsäure oder Schwefel eingesetzt wird, und in der anderen Kategorie werden die Schwefelverbindungen bei der Regeneration des Lösungsmittels unmittelbar zu elementarem Schwefel oxidiert.

Bei den meisten nassen Absorptionsverfahren entfernt das Lösungsmittel neben den Schwefelverbindungen auch die Cyanverbindungen, die meistens in Form von Blausäure vorliegen. Bei manchen dieser Absorptionsverfahren geht die Blausäure mit dem Lösungsmittel eine nicht regenerierbare Verbindung ein. Daraus folgt notwendigerweise ein ständiges Ausschleusen von verbrauchtem Lösungsmittel und Zufuhr von frischem Lösungsmittel. Das ausgeschleuste Lösungsmittel stellt wegen seiner durch Schwefel- und Cyanverbindungen bedingten Toxizität eine Umweltbelastung und ein Abwasserproblem dar. Das Ausschleusen von verbrauchtem Lösungsmittel, die notwendige Aufarbeitung dieser Menge bzw. die Zufuhr von frischem Lösungsmittel machen diese Verfahren deshalb bei Anwesenheit von Blausäure im Gas unwirtschaftlich.

Geht die Blausäure jedoch eine regenerierbare Verbindung mit dem Lösungsmittel ein, so wird die Blausäure bei den nassen Absorptionsverfahren, bei denen während der Regeneration ein Sauergas gewonnen wird, in das Sauergas freigesetzt und wirkt sich nachteilig im Verbrennungsprozeß bei der Schwefelsäure- oder Schwefelerzeugung aus. Bei den nassen Absorptionsverfahren, bei denen bereits während der Regeneration des Lösungsmittels unmittelbar elementarer Schwefel entsteht, reagiert die Blausäure mit dem Schwefel zu Thiocyanatverbindungen, die das Abwasser belasten.

Der Erfindung liegt deshalb die Aufgabe zugrunde, die vorstehend geschilderten betrieblichen und wirtschaftlichen Nachteile zu beseitigen, die im wesentlichen durch die gleichzeitige Absorption von Schwefel- und Cyanverbindungen im Lösungsmittel bedingt sind.

Das der Lösung dieser Aufgabe dienende Verfahren der eingangs genannten Art ist erfindungsgemäß dadurch gekennzeichnet, daß die im zu behandelnden Rohgas enthaltene Blausäure in einem der Entschwefelungsanlage vorgeschalteten Absorber durch physikalische Wäsche mit einem hierfür geeigneten Lösungsmittel aus dem Gas entfernt wird, wobei das mit Blausäure beladene Lösungsmittel in einem der Entschwefelungsanlage nachgeschalteten Desorber mit dem entschwefelten Gas regeneriert und daran anschließend im Kreislauf zum Absorber zurückgeführt wird, während die im Desorber abgetriebene Blausäure im entschwefelten Reingas belassen und mit diesem der Weiterverwendung zugeführt wird.

Das heißt, das erfindungsgemäße Verfahren sieht eine Lösung der der Erfindung zugrundeliegenden Aufgabe in der Weise vor, daß der Entfernung der Schwefelverbindungen aus dem blausäurehaltigen Gas, die in an sich bekannter Weise erfolgen kann, eine selektive physikalische Wäsche zur Blausäure-Entfernung vorgeschaltet wird, wobei das beladene Lösungsmittel mit dem entschwefelten Gas regeneriert und die dabei freigesetzte Blausäure im Gas belassen wird. Das erfindungsgemäße Verfahren kann hierbei mit einem verhältnismäßig geringen Aufwand an Betriebs- und Investitionskosten durchgeführt werden, da als Lösungsmittel für die Blausäure-Absorption vorzugsweise Wasser verwendet werden kann und diese in vielen Fällen in bereits vorhandenen Einrichtungen für die Gasbehandlung, wie z.B. dem Schlußkühler auf Kokereien, durchgeführt werden kann.

Neben dem Wasser können auch andere für den genannten Zweck geeignete Lösungsmittel, wie z.B. Methanol, zur Anwendung gelangen. Aus Kostengründen wird man allerdings in der Regel dem Wasser den Vorzug geben. Das verwendete Lösungsmittel wird hierbei mit einer Temperatur von 25 bis 30 ° C auf den der Blausäure-Entfernung dienenden Absorber aufgegeben.

Die Regenerierung des mit Blausäure beladenen Lösungsmittels in dem der Entschwefelungsanlage nachgeschalteten Desorber kann in zwei Varianten durchgeführt werden.

Bei der ersten Variante wird das aus dem Absorber abgezogene Lösungsmittel in seiner Gesamtheit nach entsprechender Abkühlung mit einer Temperatur von 25 bis 30 ° C auf den Kopf des Desorbers aufgegeben, worauf das Lösungsmittel nach Passieren des oberen Teils des Desorbers aus diesem abgezogen und nach Erwärmung bis auf eine Temperatur von ca.60 °C wieder in diesen im mittleren Teil eingeleitet wird.

Die zweite Variante sieht vor, daß das aus dem Absorber abgezogene Lösungsmittel in zwei Teilströme aufgeteilt wird, von denen der eine, etwa 40 Gew.-% umfassende Teilstrom unmittelbar mit einer Temperatur von 30 - 35 °C auf den Kopf des Desorbers aufgegeben wird, während der andere, etwa 60 Gew.-% umfassende Teilstrom nach entsprechender Aufheizung mit einer Temperatur von ca. 60 °C in den mittleren Teil des Desorbers eingeleitet wird, wobei die Aufheizung dieses Teilstromes ganz oder teilweise im indirekten Wärmeaustausch mit dem aus dem Desorber abgezogenen regenerierten Losungsmittel erfolgt.

Nachfolgend soll das erfindungsgemäße Verfahren an Hand der in den Abbildungen dargestellten Fließschemata näher erläutert werden. Hierbei zeigen:

Fig. 1     das Fließschema für die erste Verfahrensvariante und

Fig. 2     das Fließschema für die zweite Verfahrensvariante.

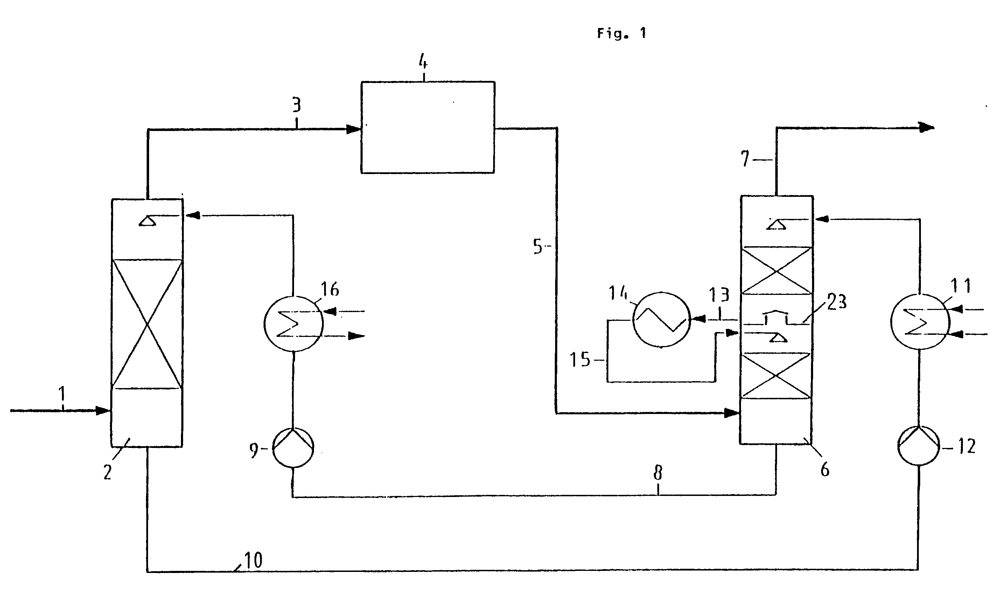

Bei dem in Fig. 1 dargestellten Fließschema tritt das mit Schwefelwasserstoff und Blausäure beladene Rohgas über die Leitung 1 am Sumpf in den Absorber 2 ein. Dieser ist mit Einbauten (Füllkörpern) versehen. Das von Blausäure weitgehend befreite Gas verläßt den Absorber 2 am Kopf und gelangt über die Leitung 3 in die Entschwefelungsanlage 4, in der der Schwefelwasserstoff und gegebenenfalls die anderen Schwefelverbindungen, wie z.B. $CS_2$ und COS, aus dem Gas entfernt werden. Hierbei können die an sich bekannten und weiter oben kurz erwähnten Verfahren zur Anwendung gelangen. Da diese Entschwefelung nicht unmittelbarer Gegenstand der vorliegenden Erfindung ist, braucht auf sie nicht näher eingegangen zu werden. Da das Gas in diesem Falle vor der Entschwefelung weitgehend von seinem Blausäuregehalt befreit worden ist, treten jedoch die weiter oben beschriebenen Probleme bei der Aufarbeitung des mit den Schwefelverbindungen beladenen Lösungsmittels nicht auf. Das entschwefelte Gas gelangt über die Leitung 5 zum Desorber 6, den es von unten nach oben durchströmt, um am Kopf desselben als blausäurehaltiges Reingas über die Leitung 7 abgezogen und dem Endverbraucher zu Heiz- oder Synthesezwecken zugeführt zu werden. Hierbei erweist sich der Blausäuregehalt des Gases, der bei etwa 2 g $HCN/m_N^3$ Gas liegt, nicht als störend.

Das aus dem Desorber 6 abfließende regenerierte Lösungsmittel wird von der Pumpe 9 über die Leitung 8 zum Absorber 2 gefördert und auf den Kopf desselben aufgegeben. Der mit Kühlwasser beaufschlagte Wärmeaustauscher 16 sorgt dabei im indirekten Wärmeaustausch für die notwendige Kühlung des Lösungsmittels vor dessen Wiedereintritt in den Absorber 2. Hierbei wird das Lösungsmittel beispielsweise von einer Temperatur von ca. 44 °C auf die erforderliche Eintrittstemperatur von 25 bis 30 °C gekühlt. Das Lösungsmittel fließt über die Einbauten des Absorbers 2 herab und absorbiert hierbei selektiv die Blausäure, die in dem von unten nach oben aufsteigenden Rohgas enthalten ist. Anschließend wird das mit Blausäure beladene Lösungsmittel aus dem Sumpf des Absorbers 2 abgezogen und von der Pumpe 12 über die Leitung 10 auf den Kopf des Desorbers 6 gepumpt.

Der mit Kühlwasser beaufschlagte Wärmeaustauscher 11 sorgt dabei für die entsprechende Abkühlung des beladenen Lösungsmittels, so daß dieses mit einer Temperatur von 25 bis 30 °C in den Desorber 6 eintritt. Dieser ist, wie die Abbildung zeigt, durch den flüssigkeitsundurchlässigen, aber gasdurchlässigen Boden 23 in einen Oberteil und einen Unterteil getrennt. Beide Teile sind hierbei wiederum mit Einbauten (Füllkörpern) versehen. Aus dem oberen Teil des Desorbers 6 wird das zu regenerierende Lösungsmittel etwa im Bereich des oberen Drittels über die Leitung 13 mit einer Temperatur von ca. 45 °C abgezogen. Anschließend wird das Lösungsmittel im Wärmeaustauscher 14 im indirekten Wärmeaustausch mit Dampf bis auf eine Temperatur von ca. 60 °C erwärmt und mit dieser Temperatur über die Leitung 15 in den Unterteil des Desorbers 6 wiedereingeleitet, wobei die Aufgabestelle etwa in der Mitte des Desorbers 6 liegt.

Durch diese zwischengeschaltete Aufwärmung des Lösungsmittels wird ein optimaler Abtrieb der Blausäure und damit eine optimale Regenerierung des Lösungsmittels erreicht. Das regenerierte Lösungsmittel wird aus dem Sumpf des Desorbers 6 abgezogen und gelangt über die Leitung 8, wie bereits beschrieben wurde, zum Absorber 2 zurück. Das zur Regenerierung des Lösungsmittels verwendete entschwefelte Gas tritt beispielsweise mit einer Temperatur von ca. 58 °C in den Desorber ein und wird beispielsweise mit einer Temperatur von ca. 27 °C aus diesem abgezogen.

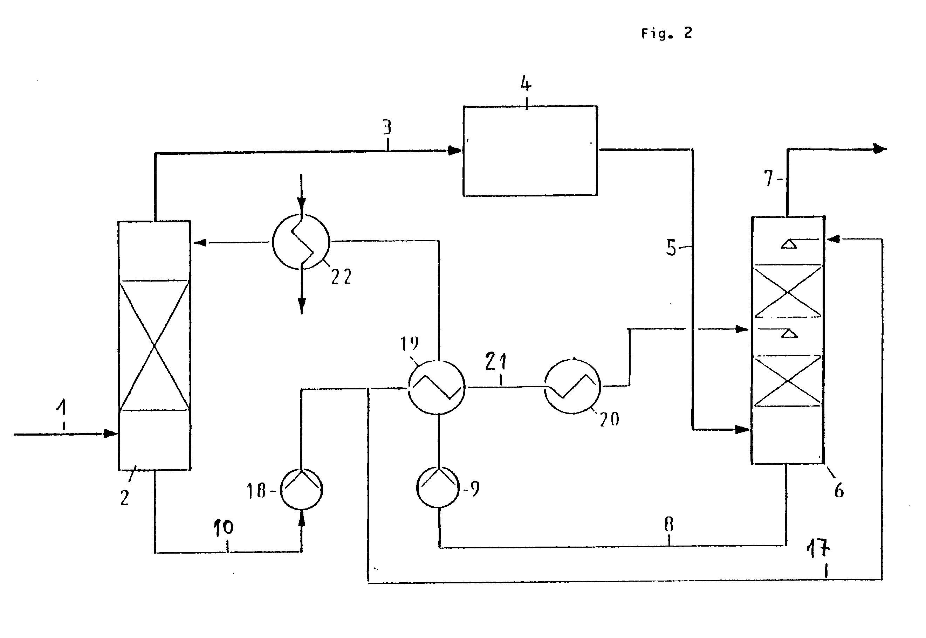

Bei der in Fig. 2 dargestellten Verfahrensvariante haben die Bezugszeichen, die mit denen in Fig. 1 übereinstimmen, selbstverständlich die gleiche Bedeutung wie dort, so daß sie hier nicht nochmals näher erläutert zu werden brauchen. Im Gegensatz zur Arbeitsweise nach Fig. 1 wird in diesem Falle das über die Leitung 10 aus dem Absorber 2 abgezogene, mit Blausäure belandene Lösungsmittel hinter der Pumpe 18 in zwei Teilströme aufgeteilt. Hierbei werden etwa 40 Gew.-% der gesamten Lösungsmittelmenge abgezweigt und über die Leitung 17 mit einer Temperatur von 30 bis 35° C unmittelbar auf den Kopf des Desorbers 6 gegeben. Dabei dient dieser Teilstrom zur Kühlung des über die Leitung 7 abfließenden Reingases bis auf eine Endtemperatur von ca. 37° C, die erforderlich ist, um den Verdampfungsverlust des Lösungsmittels in möglichst engen Grenzen zu halten.

Der andere, etwa 60 Gew.-% der gesamten Lösungsmittelmenge umfassende Teilstrom wird über die Leitung 21 in den mittleren Teil des Desorbers 6 eingeleitet. Die Wärmeaustauscher 19 und 20 dienen dabei der Aufheizung dieses Teilstromes bis auf eine Aufgabetemperatur von ca. 60° C. Hierbei ist im Wärmeaustauscher 19 ein indirekter Wärmeaustausch mit dem über die Leitung 8 abgezogenen regenerierten Lösungsmittel vorgesehen, während der Wärmeaustauscher 20 mit Dampf beheizt wird. Im Gegensatz zu der Verfahrensvariante gemäß Fig. 1 ist in diesem Falle der Desorber 6 nicht durch den Boden 23 in einen Oberteil und einen Unterteil getrennt.

Durch die vorgesehene Aufteilung des beladenen Lösungsmittels in zwei Teilströme von etwa 40 Gew.-% und etwa 60 Gew.-% wird das erfindungsgemäße Verfahren besonders wirtschaftlich. Würden weniger als etwa 40 Gew.-%, beispielsweise nur 30 Gew.-%, des beladenen Lösungsmittels auf den Kopf des Desorbers 6 aufgegeben, so könnte damit nur eine unzureichende Kühlung des über die Leitung 7 abgezogenen Reingases erreicht werden, was unwirtschaftliche Lösungsmittelverluste durch Verdampfung zur Folge hätte. Würden andererseits weniger als etwa 60 Gew.-% des beladenen Lösungsmittels auf eine Temperatur von ca. 60° C aufgeheizt werden, so fände im oberen Teil des Desorbers 6 keine Desorption von Blausäure statt. Es würde im Gegenteil wieder Blausäure aus dem Reingas in das Lösungsmittel zurück absorbiert werden, was nur durch einen höheren Wärmeaufwand zu verhindern wäre, der wiederum die Wirtschaftlichkeit des Verfahrens beeinträchtigen würde.

Das über die Leitung 8 aus dem Desorber 6 abgezogene regenerierte Lösungsmittel wird in diesem Falle vor der Wiedereinleitung in den Absorber 2 in zwei Stufen gekühlt. Als erste Kühlstufe ist hierbei der Wärmeaustauscher 19 vorgesehen, in dem, wie bereits erwähnt wurde, ein indirekter Wärmeaustausch mit dem beladenen Lösungsmittel in der Leitung 21 stattfindet. Als zweite Kühlstufe ist dann noch der Wärmeaustauscher 22 vorgesehen, in dem das regenerierte Lösungsmittel durch Wasserkühlung auf die für die Wiederaufgabe auf den Absorber 2 erforderliche Temperatur von 25 bis 30° C gekühlt wird.

Die Vorteile des erfindungsgemäßen Verfahrens lassen sich wie folgt zusammenfassen:

1. Keine Umwelt- und Abwasserprobleme,
2. wirkungsvolle Entschwefelung des eingesetzten Rohgases ohne den störenden Einfluß der Blausäure und
3. Einsparung von Strippmedium.

Abschließend soll die Wirkungsweise des erfindungsgemäßen Verfahrens noch durch das nachfolgende Ausführungsbeispiel erläutert werden.

Das Ausführungsbeispiel betrifft dabei die Verfahrensvariante gemäß Fig. 2. Hierbei wurden 18066 kg/h Koksofengas, die insgesamt 80 kg HCN enthielten, über die Leitung 1 in den Absorber 2 eingeleitet. Die Eintrittstemperatur des Koksofengases betrug hierbei 42° C. Auf den Absorber 2 wurden 400 m³/h $H_2O$ mit einem HCN-Gehalt von 12,6 kg und einer Temperatur von 30° C über die Leitung 8 aufgegeben. Insgesamt wurden 84,9 kg HCN im Absorber 2 ausgewaschen, während das über die Leitung 3 abgezogene Koksofengas nur noch 7,7 kg HCN enthielt. Mit einer Temperatur von 30° C wurde das Koksofengas in die Entschwefelungsanlage 4 eingeleitet. Das aus dem Absorber 2 ablaufende, mit HCN beladene Waschwasser wurde in zwei Teilströme aufgeteilt. Hierbei wurden 40 Gew.-% über die Leitung 17 mit einer Temperatur von 31,5° C unmittelbar auf den Kopf des Desorbers 6 aufgegeben. Die restlichen 60 Gew.-% wurden in den Wärmeaustauscher 19 und 20 bis auf eine Temperatur von 60° C aufgewärmt und mit dieser Temperatur über die Leitung 21 in den Desorber 6 eingeleitet. Die Einleitungsstelle lag dabei 3 theoretische Stufen unterhalb der Einleitungsstelle für die Leitung 17. Das aus dem Desorber 6 ablaufende Waschwasser hatte eine Temperatur von 47,4° C und wurde in den Wärmeaustauschern 19 und 22 wieder auf 30° C abgekühlt, mit welcher Temperatur es wieder auf den Absorber 2 aufgegeben wurde. Der HCN-Abtrieb im Desorber 6 erfolgte durch das entschwefelte Koksofengas, das mit einer Temperatur von 30° C von unten in den Desorber 6 eingeleitet wurde, und denselben mit einer Temperatur von 36,7° C über die Leitung 7 verließ. Dieses entschwefelte Koksofengas enthielt dabei 80 kg HCN, was einer Beladung von ca. 2 g HCN pro Normalkubikmeter Gas entspricht. Dieser HCN-Gehalt erweist sich für die Weiterverarbeitung des Gases nicht als störend.

## Patentansprüche

1. Verfahren zur Reinigung von Gasen, die neben Schwefelwasserstoff und anderen Schwefelverbindungen Blausäure als Verunreinigung enthalten, wobei die Entschwefelung der Gase in an sich bekannter Weise erfolgt, dadurch gekennzeichnet, daß die im zu behandelnden Rohgas enthaltene Blausäure in einem der Entschwefelungsanlage vorgeschalteten Absorber durch physikalische Wäsche mit einem hierfür geeigneten Lösungsmittel aus dem Gas entfernt wird, wobei das mit Blausäure beladene Lösungsmittel in einem der Entschwefelungsanlage nachgeschalteten Desorber mit dem entschwefelten Gas regeneriert und daran anschließend im Kreislauf zum Absorber zurückgeführt wird, während die im Desorber abgetriebene Blausäure im entschwefelten Reingas belassen und mit diesem der Weiterverwendung zugeführt wird.

2. Verfahren nach Anspruch 1, dadurch gekennzeichnet, daß als Lösungsmittel Wasser verwendet wird.

3. Verfahren nach den Ansprüchen 1 und 2, dadurch gekennzeichnet, daß das Lösungsmittel mit einer Temperatur von 25 bis 30°C auf den Absorber aufgegeben wird.

4. Verfahren nach den Ansprüchen 1 bis 3, dadurch gekennzeichnet, daß das aus dem Absorber abgezogene, mit Blausäure beladene Lösungsmittel in seiner Gesamtheit nach entsprechender Abkühlung mit einer Temperatur von 25 bis 30°C auf den Kopf des Desorbers aufgegeben wird, worauf das Lösungsmittel nach Passieren des oberen Teils des Desorbers aus diesem abgezogen und nach Erwärmung bis auf eine Temperatur von ca. 60°C wieder in diesen im mittleren Teil eingeleitet wird.

5. Verfahren nach den Ansprüchen 1 bis 3, dadurch gekennzeichnet, daß das aus dem Absorber abgezogene, mit Blausäure beladene Lösungsmittel in zwei Teilströme aufgeteilt wird, von denen der eine, etwa 40 Gew.-% umfassende Teilstrom unmittelbar mit einer Temperatur von 30 - 35°C auf den Kopf des Desorbers aufgegeben wird, während der andere, etwa 60 Gew.-% umfassende Teilstrom nach entsprechender Aufheizung mit einer Temperatur von ca. 60°C in den mittleren Teil des Desorbers eingeleitet wird, wobei die Aufheizung dieses Teilstromes ganz oder teilweise im indirekten Wärmeaustausch mit dem aus dem Desorber abgezogenen regenerierten Lösungsmittel erfolgt.

## Claims

1. Process for purifying gases which, in addition to hydrogen sulphide and other sulphur compounds, contain hydrogen cyanide as an impurity, the desulphurisation of the gases being carried out in a manner known per se, characterised in that the hydrogen cyanide contained in the crude gas to be treated is removed from the gas by physical scrubbing with a solvent suitable for this purpose in an absorber located upstream of the desulphurisation unit, the hydrogen cyanide-rich solvent being regenerated by the desulphurised gas in a desorber located downstream of the desulphurisation unit and then being recycled to the absorber, while the hydrogen cyanide stripped in the desorber is left in the desulphurised pure gas and passed together with the latter to a further use.

2. Process according to Claim 1, characterised in that water is used as the solvent.

3. Process according to Claims 1 and 2, characterised in that the solvent is charged at a temperature of 25 to 30°C to the absorber.

4. Process according to Claims 1 to 3, characterised in that all the hydrogen cyanide-rich solvent taken off from the absorber is, after appropriate cooling, charged at a temperature of 25 to 30°C to the top of the desorber, whereupon the solvent, after it has passed through the upper part of the desorber, is taken off from the latter and, after heating up to a temperature of about 60°C is reintroduced into the middle part thereof.

5. Process according to Claims 1 to 3, characterised in that the hydrogen cyanide-rich solvent taken off from the absorber is divided into two part streams, of which one part stream comprising about 40% by weight is charged at a temperature of 30 - 35°C directly to the top of the desorber, while the other part stream comprising about 60% by weight is, after appropriate heating-up, introduced at a temperature of about 60°C into the middle part of the desorber, the heating-up of this part stream being effected wholly or partially by indirect heat exchange with the regenerated solvent taken off from the desorber.

## Revendications

1. Procédé pour épurer des gaz contenant à titre d'impureté, à côté d'hydrogène sulfuré et d'autres composés du soufre, de l'acide cyanhydrique, étant entendu que la désulfuration des gaz est effectuée d'une manière connue en soi, caractérisé par le fait que l'acide cyanhydrique, contenu dans le gaz brut devant être traité, est éliminé du gaz dans un groupe d'absorption installé en amont de l'installation de désulfuration par un lavage physique, dans un solvant approprié à cet effet, tandis que le solvant chargé d'acide cyanhydrique est régénéré, dans un groupe de désorption installé en aval de l'installation de désulfuration, par le gaz désulfuré puis renvoyé ensuite en circuit fermé dans le groupe d'absorption, alors que l'acide cyanhydrique chassé dans le groupe de désorption est conservé dans le gaz épuré et désulfuré et dirigé avec ce dernier à la suite du traitement.

2. Procédé suivant la revendication 1, caractérisé par le fait que le solvant utilisé est de l'eau.

3. Procédé suivant les revendications 1 et 2, caractérisé par le fait que le solvant est distribué au groupe d'absorption à une température de 25 à 30° C.

4. Procédé suivant les revendications 1 à 3, caractérisé par le fait que le solvant chargé d'acide cyanhydrique et soutiré du groupe d'absorption, est distribué dans sa totalité, après un refroidissement correspondant, à une température de 25 à 30° C en tête du groupe de désorption, à la suite de quoi le solvant ayant traversé la partie supérieure au groupe de désorption est soutiré de ce dernier, puis, après un échauffement à une température pouvant aller jusqu'à 60° C environ, réinjecté dans celui-ci dans sa partie médiane.

5. Procédé suivant les revendications 1 à 3, caractérisé par le fait que le solvant chargé d'acide cyanhydrique et soutiré du groupe d'absorption, est partagé en deux flux partiels dont l'un qui constitue un flux partiel représentant à peu près les 40 % en poids, est directement distribué à une température de 30 a 35° C en tête dans le groupe de désorption, alors que l'autre flux partiel comprenant les 60 % en poids à peu près du total, est injecté après un échauffement correspondant à une température d'environ 60° C, dans la partie médiane du groupe de désorption, tandis que l'échauffement de ce dernier flux partiel est effectué en tout ou partie par un échange thermique indirect avec le solvant régénéré sortant du groupe de désorption.

Fig. 1

EP 0 298 212 B1

Fig. 2